# EUROPÄISCHE PATENTANMELDUNG

(11) **EP 1 837 531 A2**
(43) Veröffentlichungstag der Anmeldung: **26.09.2007**
(21) Anmeldenummer: 07103847.5
(22) Anmeldetag: 09.03.2007
(51) Int. Cl.: F16B 13/06

(54) **Befestigungselement**

(30) Priorität: 22.03.2006 DE 102006000128
(71) Anmelder: HILTI Aktiengesellschaft, 9494 Schaan (LI)
(72) Erfinder: Ayrle, Thomas, 86853 Langerringen (DE)
(74) Vertreter: Wildi, Roland

(57) **Zusammenfassung**

Ein Befestigungselement (11) zur Verankerung in einem Bohrloch eines Untergrundes umfasst einen Ankerbolzen und eine Spreizhülse (18). Der Ankerbolzen ist mit einem, eine Längsachse (12) aufweisenden Schaft (13) versehen, der an einem ersten Endbereich (14) ein Lastangriffsmittel (15) und an einem zweiten Endbereich (16) ein Spreizteil (17) zum Aufweiten der Spreizhülse (18) aufweist, die den Schaft (13) zumindest teilweise umfasst. Das Spreizteil (17) weist einen sich in Richtung des freien Endes des zweiten Endbereiches (16) erweiternden konischen Abschnitt (19) und einen daran anschliessenden zylindrischen Abschnitt (20) mit einer Profilierung auf. Die Profilierung am zylindrischen Abschnitt (20) des Spreizteils (17) ist als parallel zur Längsachse (12) verlaufende Rippen (26) ausgebildet, welche die die Axialprojektion der Aussenkontur der Spreizhülse (18) mit Überstand (U) überragen.

## Beschreibung

Die Erfindung betrifft ein Befestigungselement zur Verankerung in einem Bohrloch eines Untergrundes, der im Oberbegriff des Patentanspruchs 1 genannten Art.

Befestigungselemente der genannten Art dienen dem Befestigen eines Gegenstandes an einem Bauteil, das zur Aufnahme des Befestigungselementes ein Bohrloch aufweist. Das Befestigungselement wird durch eine Relativverschiebung zwischen einem Spreizteil und einer Spreizhülse verankert. Die durch das Spreizteil spreizbare Spreizhülse weitet sich beim Verspannen des Befestigungselementes radial auf und verklemmt dabei das Befestigungselement im Bohrloch. Für eine Montage des Befestigungselementes durch eine Durchführöffnung eines am Untergrund zu befestigenden Gegenstandes weist das Befestigungselement im unverspannten Zustand über seine gesamte Längserstreckung eine im Wesentlichen gleichbleibende radiale Erstreckung auf.

Je stärker ein Befestigungselement belastet wird, desto grösser wird die wirkende Spreizkraft und desto weiter wird das Spreizteil in die Spreizhülse hineingezogen. Die maximal auf das Befestigungselement aufbringbare Last ist einerseits von der Tragfähigkeit des verwendeten Materials für das Befestigungselement, z. B. des Stahls, und andererseits von der Tragfähigkeit des Untergrundes abhängig. Mit einem Drehmomentschlüssel kann die aufgebrachte Verspannkraft dosiert aufgebracht werden.

Aus der EP 1 243 801 A1 ist beispielsweise ein Befestigungselement zur Verankerung in einem Bohrloch eines Untergrundes mit einem Ankerbolzen und einer Spreizhülse bekannt. Der Ankerbolzen ist mit einem, eine Längsachse aufweisenden Schaft versehen, der an einem ersten Endbereich ein Lastangriffsmittel und an einem zweiten, dem ersten Endbereich gegenüberliegenden Endbereich ein Spreizteil zum Aufweiten der Spreizhülse aufweist, die den Schaft zumindest teilweise umfasst. Das Spreizteil weist einen sich in Richtung des freien Endes des zweiten Endbereichs erweiternden konischen Abschnitt und einen daran anschliessenden zylindrischen Abschnitt auf. Als Verdrehsicherung für die Spreizhülse sind an dem konischen Abschnitt des Spreizteils parallel zur Längsachse verlaufende und radial von dem Spreizteil abragende Rippen vorgesehen, die in Längsschlitze der Spreizhülse eingreifen.

Nachteilig an der bekannten Lösung ist, dass viele Anwender beim Verspannen eines solchen Befestigungselementes keinen Drehmomentschlüssel verwenden und so eine zu hohe Last auf das Befestigungselement aufbringen. Dies kann dazu führen, dass das Spreizteil durch die Spreizhülse hindurchgezogen wird und das Befestigungselement somit versagt. Weiter kann der Untergrund aufgrund einer von dem Befestigungselement ausgeübten hohen Spreizkraft bereichsweise reissen, wodurch sich der Verankerungsbereich vergrössert, was ebenfalls zu einem Versagen des Befestigungselementes führen kann. Insbesondere bei kleineren Befestigungselementen in verhältnismässig grossen Bohrlöchern können zudem beim Verspannen des Befestigungselementes Probleme auftreten, da sich das Befestigungselement mitdreht.

Aus der DE 71 00 768 U ist ein weiteres gattungsgemässes Befestigungselement bekannt, das zum Verhindern des Durchziehens entlang eines zylindrischen Abschnitts des Spreizteils eine in Längsrichtung des Befestigungselementes verlaufende Profilierung in Form einer Riffelung aufweist.

Nachteilig an der bekannten Lösung ist, dass ein Mitdrehen des Befestigungselementes im Bohrloch beim Verspannen desselben weiterhin auftreten kann.

Aufgabe der Erfindung ist es, ein Befestigungselement zur Verankerung in einem Bohrloch eines Untergrundes zu schaffen, das eine reduzierte Neigung zum Durchziehen unter hoher Last sowie ein Verdrehsicherung aufweist und einfach setzbar ist.

Die Aufgabe ist durch die Merkmale des unabhängigen Anspruchs gelöst. Vorteilhafte Weiterbildungen sind in den Unteransprüchen dargelegt.

Gemäss der Erfindung ist die Profilierung am zylindrischen Abschnitt als parallel zur Längsachse verlaufende Rippen ausgebildet, welche die Axialprojektion der Aussenkontur der Spreizhülse mit Überstand überragen.

Mit den einzelnen Rippen an dem zylindrischen Abschnitt des Spreizteils wird der maximale Durchmesser des Spreizteils lediglich punktuell vergrössert, wodurch die Setzbarkeit des Befestigungselementes nur geringfügig beeinflusst wird. Der allfällig vorhandene Spalt zwischen dem Spreizteil und der Bohrlochwand füllt sich beispielsweise mit im Bohrloch vorhandenen Bohrmehl oder Bohrklein.

Der Überstand der Rippen über die Axialprojektion der Aussenkontur beziehungsweise über den radialen Hüllkreis der Spreizhülse ist vorteilhaft derart gewählt, dass beim Einführen des Befestigungselementes die Bohrlochwandung von den Rippen gefurcht wird. Durch den geschaffenen Reib- und Formschluss des Spreizteils mit der Bohrlochwandung werden eine Verdrehsicherung sowie eine Zentrierhilfe für das Spreizteil und somit für das gesamte Befestigungselement ausgebildet. Die mit den Rippen geschaffene Verdrehsicherung reduziert die Neigung zum Mitdrehen des Befestigungselementes bei einem schwergängigen Gewinde als Lastangriffsmittel, wie es unter Baustellenbedingungen oftmals vorhanden ist.

Zudem bilden die am zylindrischen Abschnitt des Spreizteils angeordneten und in Längsrichtung verlaufenden Rippen einen zusätzlichen Widerstand für die Spreizhülse aus, wodurch ein Durchziehen des Befestigungselementes verhindert wird. Damit weist das erfindungsgemässe Befestigungselement gegenüber einem herkömmlichen Befestigungselement höhere Versagenslasten und eine geringere Streuung der Haltewerte auf.

Vorzugsweise beträgt der Überstand 0.3 bis 2.0 mm, so dass bei dem üblichen Verhältnis zwischen dem Aussendurchmesser des Befestigungselementes und der Bohrlochwandung ein Kontakt von den Rippen mit der Bohrlochwandung beim Setzen des Befestigungselementes in das Bohrloch und damit die furchende Wirkung der Rippen gewährleistet ist.

Bevorzugt sind zwei bis acht Rippen an dem zylindrischen Abschnitt des Spreizteils vorgesehen. Vorteilhaft weist das Spreizteil vier Rippen am zylindrischen Abschnitt auf, wodurch ein vorteilhaftes Verhältnis zwischen erhöhtem Widerstand beim Setzen des Befestigungselementes und den durch die Rippen geschaffenen Lastzuwachs gegeben ist.

Vorzugsweise sind die Rippen gleichmässig verteilt entlang dem radialen Umfang des Spreizteils angeordnet, wodurch eine vorteilhafte Zentrierhilfe beim Setzen des Befestigungselementes geschaffen wird.

Bevorzugt weisen die Rippen quer zur Längsrichtung ein dachförmiges Profil auf, um das Furchen der Rippen in der Bohrlochwandung zu erleichtern.

Vorzugsweise beträgt der Winkel des dachförmigen Profils weniger als 120°, wodurch das Furchen der Rippen in der Bohrlochwandung weiter erleichtert wird. Besonders vorteilhaft beträgt der Winkel des dachförmigen Profils weniger als 60°.

Bevorzugt verläuft eine erste, parallel zur Längsachse verlaufende Kante der Rippen in Verlängerung des Winkels des Spreizteils. Damit wird ein kontinuierlicher Übergang von dem konischen Abschnitt des Spreizteils zu den Rippen beim Aufweiten der Spreizhülse geschaffen und eine bessere Einleitung der resultierenden Spreizkräfte in den Untergrund gewährleistet. Alternativ weist diese Kante der Rippen einen zum konischen Abschnitt des Spreizteils unterschiedlichen Winkel bezüglich der Längsachse des Befestigungselementes auf, der vorteilhaft grösser als der Winkel des konischen Abschnitts des Spreizteils bezüglich der Längsachse ist.

Vorzugsweise ist eine zweite parallel zur Längsachse verlaufende Kante als scharfe Schneidkante ausgebildet. Mit dieser Ausbildung der Rippen wird das Furchen der Rippen in der Bohrlochwandung beim Setzen des Befestigungselementes weiter erleichtert.

Bevorzugt läuft die zweite parallel zur Längsachse verlaufende Kante zum freien Ende des Spreizteils hin aus. Diese Ausbildung der Rippen erleichtert das Furchen der Bohrlochwandung beim Setzen des Befestigungselementes besonders vorteilhaft.

Alternativ verläuft die zweite Kante der Rippen parallel beabstandet zur Längsachse des Befestigungselementes, wobei eine dritte, dem freien Ende des Spreizteils zugewandte Kante im Wesentlichen senkrecht zur Längsachse verläuft. Diese dritte Kante ist vorteilhaft als scharfe Schneidkante ausgebildet. Um das Setzen des Befestigungselementes zu vereinfachen, ist die Ecke zwischen der zweiten Kante und der dritten Kante vorteilhaft abgefast. Diese Ausführungsform der Rippen ist einfach herzustellen, was eine kostengünstige Fertigung des Befestigungselementes ermöglicht.

Die Erfindung wird nachstehend anhand von Ausführungsbeispielen näher erläutert. Es zeigen:
- Fig. 1: eine Längsansicht eines erfindungsgemässen Befestigungselementes;
- Fig. 2: einen vergrösserten Teilschnitt durch den Bereich A in Fig. 1;
- Fig. 3: einen Schnitt entlang der Ebene III-III in Fig. 1; und

- Fig. 4: einen vergrösserten Detailschnitt analog Fig. 2 durch ein zweites Ausführungsbeispiel des erfindungsgemässen Befestigungselementes.

Grundsätzlich sind in den Figuren gleiche Teile mit den gleichen Bezugszeichen versehen.

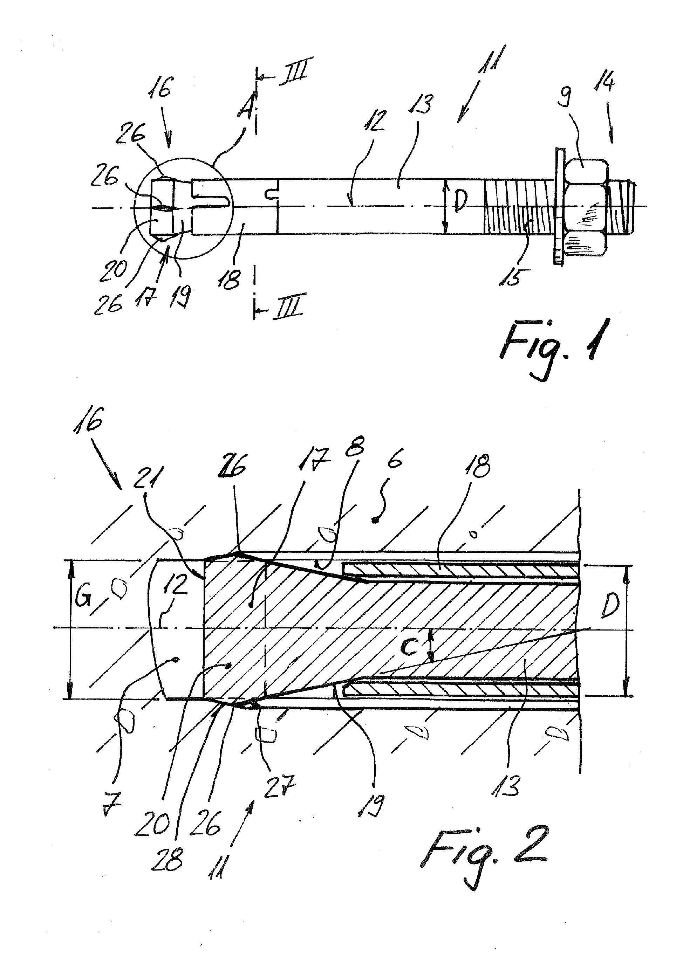

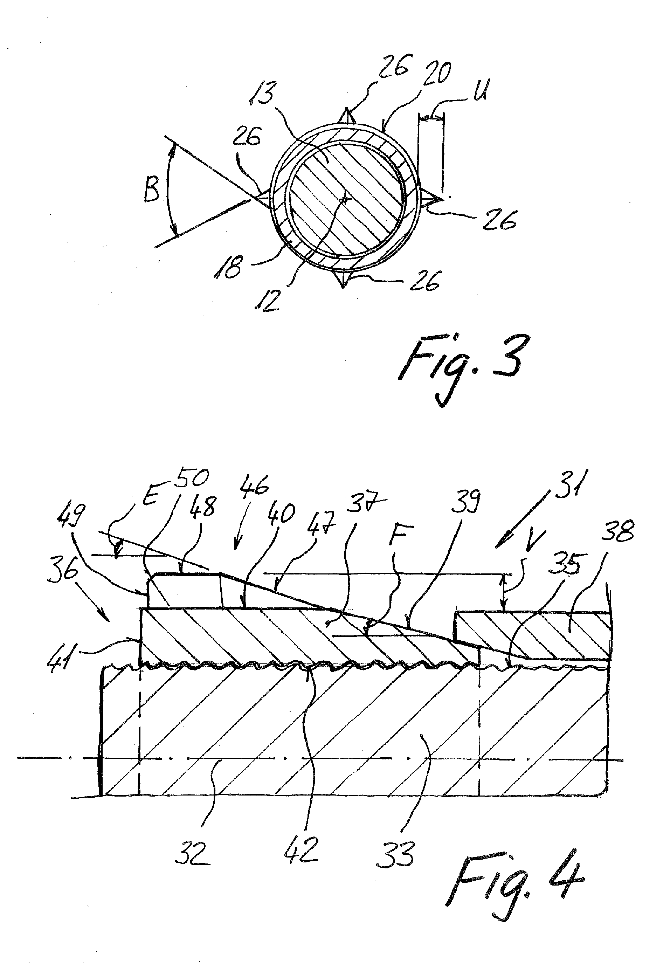

Das in den Figuren 1 bis 3 dargestellte Befestigungselement 11 zur Verankerung in einem Bohrloch 7 eines Untergrundes 6 umfasst einen Ankerbolzen und eine Spreizhülse 18. Der Ankerbolzen ist mit einen, eine Längsachse 12 aufweisenden Schaft 13 versehen, der an einem ersten Endbereich 14 ein Lastangriffsmittel 15 und an einem zweiten, dem ersten Endbereich 14 gegenüberliegenden Endbereich 16 ein Spreizteil 17 zum Aufweiten der Spreizhülse 18 aufweist, die den Schaft 13 zumindest teilweise umfasst. Das Spreizteil 17 weist einen sich in Richtung des freien Endes des zweiten Endbereiches 16 erweiternden konischen Abschnitt 19 und einen daran anschliessenden zylindrischen Abschnitt 20 mit einer Profilierung auf. Der konische Abschnitt 19 des Spreizteils 17 ist der Spreizhülse 18 zugewandt.

Die Profilierung an dem zylindrischen Abschnitt 20 des Spreizteil 17 ist als vier parallel zur Längsachse 12 verlaufende und radial von dem Spreizteil 17 abragende Rippen 26 ausgebildet, welche die Axialprojektion der Aussenkontur der Spreizhülse 18 mit Überstand U überragen. Der Überstand U beträgt in diesem Ausführungsbeispiel bei allen Rippen 26 1.5 mm. Die Rippen 26 sind gleichmässig verteilt entlang dem radialen Umfang des Spreizteils 17 angeordnet.

Die Rippen 26 weisen quer zur Längsrichtung ein dachförmiges Profil auf, wobei der Winkel B des dachförmigen Profils 55° beträgt. Weiter weisen die Rippen 26 in Längsrichtung parallel zur Längsachse 12 ebenfalls eine dachförmige Ausgestaltung auf. Eine erste, parallel zur Längsachse 12 verlaufende Kante 27 der Rippen 26 verläuft in Verlängerung des Winkels C des konischen Abschnitts 19 des Spreizteils 17. Der Winkel C beträgt in diesem Ausführungsbeispiel 12°. Eine zweite, parallel zur Längsachse 12 verlaufende und einem freien Ende 21 des Spreizteils 17 zugewandte Kante 28 ist als scharfe Schneidkante ausgebildet, die zum freien Ende 21 des Spreizteils 17 hin ausläuft.

Zum Setzen des Befestigungselementes 11 wird zuerst an der gewünschten Stelle ein Bohrloch 7 in den Untergrund 6 gebohrt und anschliessend das Befestigungselement 11 in dieses eingeführt. Das Befestigungselement 11 weist einen Durchmesser D auf, der etwas kleiner als der Durchmesser G des erstellten Bohrlochs 7 ist. Aufgrund des Überstandes U der Rippen 26 gegenüber der Axialprojektion der Aussenkontur der Spreizhülse 18 kommen diese mit der Bohrlochwandung 8 in Kontakt und furchen diese, so dass das Spreizteil 17 reib- und formschlüssig im Bohrloch 7 gehalten ist. Die Spreizhülse 18 weist Vorsprünge auf (hier nicht dargestellt), die mit der Bohrlochwandung in Anlage kommen. Beim Verspannen des gesetzten Befestigungselementes 11 mittels der Mutter 9 wird das Spreizteil 17 axial relativ zu der Spreizhülse 18 verschoben und weitet diese dabei auf.

Das in Figur 4 nur ausschnittsweise dargestellte zweite Ausführungsbeispiel eines erfindungsgemässen Befestigungselementes 31 weist als Schaft 33 eine Gewindestange mit einem Aussengewinde 35 auf, das sich über die gesamte Längserstreckung entlang einer Längsachse 32 des Schaftes 33 erstreckt und am ersten Endbereich des Schaftes 33 das Lastangriffsmittel ausbildet. Am zweiten Endbereich 36 des Schaftes 33 ist als Spreizteil 37 zum Aufweiten einer den Schaft 33 zumindest teilweise umfassende Spreizhülse 38 eine Konushülse mit einem Innengewinde 42 vorgesehen, die auf den Schaft 33 aufgeschraubt ist. Das Spreizteil 37 weist einen sich in Richtung des freien Endes des zweiten Endbereiches 36 erweiternden konischen Abschnitt 39 und einen daran anschliessenden zylindrischen Abschnitt 40 mit einer Profilierung auf.

Die Profilierung am zylindrischen Abschnitt 40 des Spreizteils 37 ist als parallel zur Längsachse 32 verlaufende und radial von dem Spreizteil 37 abragende Rippen 46 ausgebildet, welche die Axialprojektion der Aussenkontur der Spreizhülse 38 mit einem Überstand V überragen. Der Überstand V der Rippen 46 beträgt in diesem Ausführungsbeispiel 1.0 mm.

Die Rippen 46 weisen quer zur Längsrichtung ebenfalls ein dachförmiges Profil auf. Weiter weisen die Rippen 46 in Längsrichtung parallel zur Längsachse 32 eine trapezförmige Ausgestaltung auf. Eine erste, parallel zur Längsachse 32 verlaufende Kante 47 der Rippen 46 verläuft in einem Winkel E, der 20° bezüglich der Längsachse 32 beträgt. Der Winkel F des konischen Abschnitts 39 des Spreizteils 37 beträgt in diesem Ausführungsbeispiel 10° bezüglich der Längsachse 32 und ist somit kleiner als der Winkel E ausgebildet. Die zweite Kante 48 verläuft parallel beabstandet zur Längsachse 32 und ist als scharfe Schneidkante ausgebildet. Weiter ist eine dritte Kante 49 vorgesehen, die dem freien Ende 41 des Spreizteils 37 zugewandt ist und im Wesentlichen senkrecht zur Längsachse 32 ausgerichtet ist. Die dritte Kante 49 ist beispielsweise ebenfalls als scharfe Schneidkante ausgebildet. Die Ecke 50 zwischen der zweiten Kante 48 und der dritten Kante 49 ist abgefast.

## Patentansprüche

1. Befestigungselement zur Verankerung in einem Bohrloch (7) eines Untergrundes (6) mit Ankerbolzen und Spreizhülse (18; 38), wobei der Ankerbolzen mit einem, eine Längsachse (12; 32) aufweisenden Schaft (13; 33) versehen ist, der an einem ersten Endbereich (14) ein Lastangriffsmittel (15) und an einem zweiten, dem ersten Endbereich (14) gegenüberliegenden Endbereich (16; 36) ein Spreizteil (17; 37) zum Aufweiten der Spreizhülse (18; 38) aufweist, die den Schaft (13; 33) zumindest teilweise umfasst, wobei das Spreizteil (17; 37) einen sich in Richtung des freien Endes des zweiten Endbereiches (16; 36) des Schafts (13; 33) erweiternden konischen Abschnitt (19; 39) und einen daran anschliessenden zylindrischen Abschnitt (20; 40) mit einer Profilierung aufweist **dadurch gekennzeichnet, dass**
die Profilierung am zylindrischen Abschnitt (20; 40) als parallel zur Längsachse (12; 32) verlaufende Rippen (26; 46) ausgebildet ist, welche die Axialprojektion der Aussenkontur der Spreizhülse (18; 38) mit Überstand (U; V) überragen.

2. Befestigungselement nach Anspruch 1, **dadurch gekennzeichnet, dass** der Überstand (U; V) 0.3 bis 2.0 mm beträgt.

3. Befestigungselement nach Anspruch 1 oder 2, **dadurch gekennzeichnet, dass** zwei bis acht Rippen (26; 46) an dem zylindrischen Abschnitt (20; 40) des Spreizteils (17; 37) vorgesehen sind.

4. Befestigungselement nach einem der Ansprüche 1 bis 3, **dadurch gekennzeichnet, dass** die Rippen (26; 46) gleichmässig verteilt entlang dem radialen Umfang des Spreizteils (17; 37) angeordnet sind.

5. Befestigungselement nach einem der Ansprüche 1 bis 4, **dadurch gekennzeichnet, dass** die Rippen (26; 46) quer zur Längsrichtung ein dachförmiges Profil aufweisen.

6. Befestigungselement nach Anspruch 5, **dadurch gekennzeichnet, dass** der Winkel (B) des dachförmigen Profils (26; 46) weniger als 120° beträgt.

7. Befestigungselement nach einem der Ansprüche 1 bis 6, **dadurch gekennzeichnet, dass** eine erste, parallel zur Längsachse (32) verlaufende Kante (27) der Rippen (26) in Verlängerung des Winkels (C) des Spreizteils (17) verläuft.

8. Befestigungselement nach einem der Ansprüche 1 bis 7, **dadurch gekennzeichnet, dass** eine zweite parallel zur Längsachse (12; 32) verlaufende Kante (28; 48) als scharfe Schneidkante ausgebildet ist.

9. Befestigungselement nach Anspruch 8, **dadurch gekennzeichnet, dass** die zweite Kante (28) zum freien Ende (21) des Spreizteils (17) hin ausläuft.
